(19) **Europäisches Patentamt**
**European Patent Office**
**Office européen des brevets**

(11) **EP 4 460 081 A1**

(12) **EUROPEAN PATENT APPLICATION**
published in accordance with Art. 153(4) EPC

(43) Date of publication:
**06.11.2024 Bulletin 2024/45**

(21) Application number: **22914549.5**

(22) Date of filing: **23.12.2022**

(51) International Patent Classification (IPC):
**H04W 28/20** (2009.01)

(52) Cooperative Patent Classification (CPC):
**H04W 28/20; H04W 72/0453; H04W 72/25;**
**H04W 74/08**

(86) International application number:
**PCT/CN2022/141477**

(87) International publication number:
**WO 2023/125295 (06.07.2023 Gazette 2023/27)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **31.12.2021 CN 202111677011**

(71) Applicant: **Spreadtrum Communications**
**(Shanghai) Co., Ltd.**
**Shanghai 201203 (CN)**

(72) Inventor: **ZHANG, Meng**
**Shanghai 201203 (CN)**

(74) Representative: **Nordmeyer, Philipp Werner**
**df-mp Dörries Frank-Molnia & Pohlman**
**Patentanwälte Rechtsanwälte PartG mbB**
**Theatinerstraße 16**
**80333 München (DE)**

(54) **PHYSICAL SIDELINK FEEDBACK CHANNEL SENDING METHOD AND APPARATUS, AND READABLE STORAGE MEDIUM**

(57) A physical sidelink feedback channel sending method and apparatus, and a readable storage medium. The method comprises: sending a physical sidelink feedback channel on physical sidelink feedback channel resources which correspond to channel bandwidths that have been successfully subjected to listen-before-talk, wherein the channel bandwidths that have been successfully subjected to listen-before-talk correspond to the same bandwidth part, the bandwidth part corresponds to a plurality of channel bandwidths, and each channel bandwidth corresponds to at least one physical sidelink feedback channel resource. The solution can avoid the failure of PSFCH transmission.

```
┌──────────────────────────────────────┐
│ the UE performs LBT respectively on a │──── S101
│ plurality of channel bandwidths       │
│ corresponding to a BWP                │
└──────────────────────────────────────┘
                    │
                    ▼
┌──────────────────────────────────────┐
│ the UE sends PSFCH on at least one    │──── S102
│ PSFCH resource corresponding to at    │
│ least one channel bandwidth where LBT │
│ is successfully performed             │
└──────────────────────────────────────┘
```

**FIG. 1**

EP 4 460 081 A1

# Description

## CROSS-REFERENCE TO RELATED APPLICATIONS

This application claims priority to Chinese Patent Application No. 202111677011.X, filed on December 31, 2021, and entitled "PHYSICAL SIDELINK FEEDBACK CHANNEL SENDING METHOD AND APPARATUS, AND READABLE STORAGE MEDIUM", the entire disclosure of which is incorporated herein by reference.

## TECHNICAL FIELD

The present disclosure generally relates to radio communication technology field, and more particularly, to a Physical Sidelink Feedback CHannel (PSFCH) sending method and apparatus, and a readable storage medium.

## BACKGROUND

As present, research on sidelink mainly focuses on licensed spectrum. One PSFCH occupies one physical Resource Block (RB) in a frequency domain, and occupies two Orthogonal Frequency Division Multiplexing (OFDM) symbols in a time domain.

In a subsequent evolution process, sidelink may be applied to unlicensed spectrum. When sidelink is applied to unlicensed spectrum, PSFCH may be unable to transmit at some time points due to Listen Before Talk (LBT) restrictions.

## SUMMARY

Embodiments of the present disclosure may avoid a situation that some PSFCHs cannot be transmitted due to LBT.

In an embodiment of the present disclosure, a PSFCH sending method is provided, including: sending PSFCH on at least one PSFCH resource corresponding to at least one channel bandwidth where LBT is successfully performed, where the at least one channel bandwidth where LBT is successfully performed corresponds to a same Bandwidth Part (BWP), and the BWP corresponds to a plurality of channel bandwidths each of which corresponds to one or more PSFCH resources.

Optionally, prior to said sending PSFCH on at least one PSFCH resource corresponding to at least one channel bandwidth where LBT is successfully performed, the method further includes: receiving indication information which indicates a physical resource block used for PSFCH transmission in each of the plurality of channel bandwidths.

Optionally, said receiving the indication information includes: receiving an sl-PSFCH-RB-set parameter, where each bit in the sl-PSFCH-RB-set parameter corresponds to one physical resource block.

Optionally, said sending PSFCH on at least one PSFCH resource corresponding to at least one channel bandwidth where LBT is successfully performed includes: sending PSFCH on the PSFCH resource corresponding to each of the at least one channel bandwidth where LBT is successfully performed; or selecting one PSFCH resource from multiple PSFCH resources corresponding to multiple channel bandwidths where LBT is successfully performed, and sending PSFCH on the selected PSFCH resource.

Optionally, said selecting one PSFCH resource from a plurality of PSFCH resources corresponding to multiple channel bandwidths where LBT is successfully performed includes any one of the following: selecting one PSFCH resource corresponding to a channel bandwidth with a greatest channel bandwidth index number; selecting one PSFCH resource corresponding to a channel bandwidth with a smallest channel bandwidth index number; selecting one PSFCH resource corresponding to a physical resource block with a greatest physical resource block index number; selecting one PSFCH resource corresponding to a physical resource block with a smallest physical resource block index number; or selecting one PSFCH resource earliest in a time sequence.

Optionally, PSFCH resources corresponding to the plurality of channel bandwidths are distributed in different slots.

Optionally, each of the plurality of channel bandwidths corresponds to one PSFCH resource.

Optionally, the plurality of channel bandwidths are frequency domain bandwidths used for LBT.

In an embodiment of the present disclosure, a PSFCH sending apparatus is provided, including: a sending circuitry configured to send PSFCH on at least one PSFCH resource corresponding to at least one channel bandwidth where LBT is successfully performed, where the at least one channel bandwidth where LBT is successfully performed corresponds to a same BWP, and the BWP corresponds to a plurality of channel bandwidths each of which corresponds to one or more PSFCH resources.

In an embodiment of the present disclosure, a non-volatile or non-transitory computer-readable storage medium having computer instructions stored therein is provided, where when the computer instructions are executed by a processor, any one of the above PSFCH sending methods is performed.

In an embodiment of the present disclosure, a PSFCH sending apparatus including a memory and a processor is provided, where the memory has computer instructions stored therein, and when the processor executes the computer instructions, any one of the above PSFCH sending methods is performed.

Embodiments of the present disclosure may provide following advantages.

A BWP corresponds to a plurality of channel bandwidths each of which has one or more PSFCH resources. PSFCH is sent on at least one PSFCH resource corresponding to at least one channel bandwidth where LBT is successfully performed. As each channel bandwidth corresponds to one or more PSFCH resources, a Physical Sidelink Shared Channel (PSSCH) correspond to a plurality of PSFCH resources accordingly, thereby increasing a number of PSFCH resources corresponding to the PSSCH, which may avoid a situation that PSFCH cannot be transmitted, and improve data transmission efficiency.

BRIEF DESCRIPTION OF THE DRAWINGS

FIG. 1 is a flow chart of a PSFCH sending method according to an embodiment; and

FIG. 2 is a block diagram of a PSFCH sending apparatus according to an embodiment.

DETAILED DESCRIPTION

As described in the background, when sidelink is applied to unlicensed spectrum, PSFCH may be unable to transmit at some time points due to LBT restrictions.

In embodiments of the present disclosure, as each channel bandwidth corresponds to one or more PSFCH resources, a PSSCH corresponds to a plurality of PSFCH resources accordingly, thereby increasing a number of PSFCH resources corresponding to the PSSCH, which may avoid a situation that PSFCH cannot be transmitted, and improve data transmission efficiency.

In order to clarify the objects, characteristics and advantages of the disclosure, embodiments of present disclosure will be described in detail in conjunction with accompanying drawings.

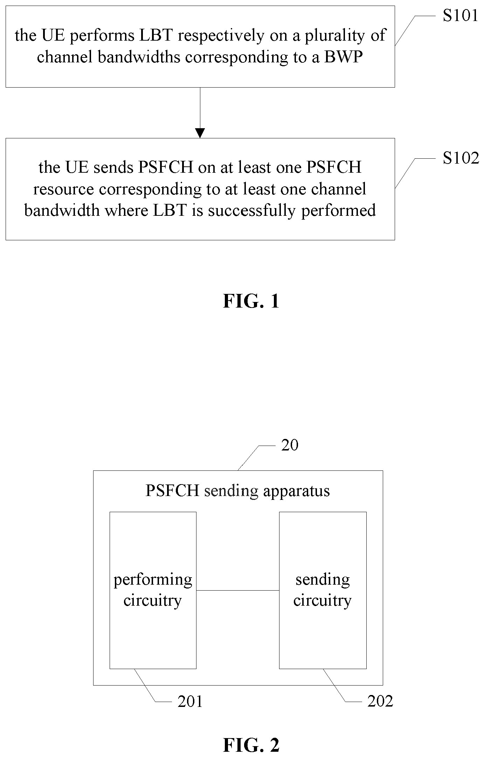

An embodiment of the present disclosure provides a PSFCH sending method. Referring to FIG. 1, detailed description is given below through specific steps.

In some embodiments, the PSFCH sending method including S101 and S102 may be performed by a chip with a data processing function in a User Equipment (UE), or by a chip module containing a chip with a data processing function in a UE.

In S101, the UE performs LBT respectively on a plurality of channel bandwidths corresponding to a BWP.

In some embodiments, a BWP may include one or more channel bandwidths, or one or more channel bandwidths may include a frequency domain bandwidth of a BWP.

In practice, a size of a channel bandwidth may be 20MHz or other values. Only after LBT is successfully performed on a channel bandwidth, data transmission can be performed on this channel bandwidth.

A BWP may be 100MHz, thus the BWP may include 5 channel bandwidths. In existing techniques, the BWP of 100MHz essentially includes merely one PSFCH resource, that is, one PSSCH corresponds to one PSFCH resource.

However, in the embodiments of the present disclosure, one BWP is 100 MHz, corresponding to 5 channel bandwidths. If one BWP is set to correspond to one PSFCH resource, one BWP corresponds to 5 PSFCH resources.

In S 102, the UE sends PSFCH on at least one PSFCH resource corresponding to at least one channel bandwidth where LBT is successfully performed.

In some embodiments, a specific process of performing LBT on the channel bandwidth may be referred to an existing standard, and is not described in detail in the embodiments of the present disclosure.

In some embodiments, after learning that there are multiple channel bandwidths where LBT is successfully performed, the UE may select one PSFCH resource from multiple PSFCH resources corresponding to the multiple channel bandwidths where LBT is successfully performed, and send PSFCH on the selected PSFCH resource.

In some embodiments, when selecting one PSFCH resource from the multiple PSFCH resources corresponding to the multiple channel bandwidths where LBT is successfully performed, a PSFCH resource corresponding to a channel bandwidth with a greatest channel bandwidth index may be selected, or a PSFCH resource corresponding to a channel bandwidth with a smallest channel bandwidth index may be selected.

For example, the channel bandwidths where LBT is successfully performed include channelbandwidth1, channelbandwidth2 and channelbandwidth4. If the PSFCH resource corresponding to the channel bandwidth with the greatest channel bandwidth index is selected, the PSFCH resource corresponding to channelbandwidth4 is selected. If the PSFCH resource corresponding to the channel bandwidth with the smallest channel bandwidth index is selected, the PSFCH resource corresponding to channelbandwidth1 is selected.

In some embodiments, when selecting one PSFCH resource from the multiple PSFCH resources corresponding to the multiple channel bandwidths where LBT is successfully performed, a PSFCH resource corresponding to a physical resource block with the greatest physical resource block index number may be selected, or a PSFCH resource corresponding to a physical resource block with a smallest physical resource block index number may be selected.

For example, the channel bandwidths where LBT is successfully performed include channelbandwidth1 and channelbandwidth2, the physical resource block index number of the PSFCH resource corresponding to channelbandwidth1 is A, the physical resource block index number of the PSFCH resource corresponding to channelbandwidth2 is B, and A<B. If the PSFCH resource corresponding to the physical resource block with the greatest physical resource block index number is selected, the PSFCH resource corresponding to channelbandwidth2 is selected; or if the PSFCH resource corresponding to the physical resource block with the smallest physical resource block index number is selected, the PSFCH resource corresponding to channelbandwidth1 is selected.

In some embodiments, when selecting one PSFCH resource from the multiple PSFCH resources corresponding to the multiple channel bandwidths where LBT is successfully performed, a PSFCH resource that is ranked the earliest in a time sequence may be selected.

For example, the channel bandwidths where LBT is successfully performed include channelbandwidth1 and channelbandwidth2, and the PSFCH resource corresponding to channelbandwidth1 is earlier in the time sequence than the PSFCH resource corresponding to channelbandwidth2, thus, the PSFCH resource corresponding to channelbandwidth1 is selected.

It is understandable that other methods may be used to select one PSFCH resource from the multiple PSFCH resources corresponding to the multiple channel bandwidths where LBT is successfully performed. For example, a PSFCH resource may be randomly selected from the multiple PSFCH resources corresponding to the multiple channel bandwidths where LBT is successfully performed.

In some embodiments, after learning that there are multiple channel bandwidths where LBT is successfully performed, the UE may send PSFCH on the multiple PSFCH resources corresponding to the multiple channel bandwidths where LBT is successfully performed, respectively. Alternatively, after learning that there are multiple channel bandwidths where LBT is successfully performed, the UE may select two or more PSFCH resources from multiple PSFCH resources corresponding to the multiple channel bandwidths where LBT is successfully performed, and send PSFCH on the selected PSFCH resources.

A method for selecting two or more PSFCH resources from the multiple PSFCH resources corresponding to the multiple channel bandwidths where LBT is successfully performed may be referred to the above-mentioned method of selecting one PSFCH resource from the multiple PSFCH resources corresponding to the multiple channel bandwidths where LBT is successfully performed, and is not repeated here.

In some embodiments, PSFCH resources corresponding to the plurality of channel bandwidths may be distributed in different slots. In other words, the plurality of channel bandwidths may be distributed in different slots.

In some embodiments, before S102, the UE may further receive indication information sent by a base station. The indication information indicates a physical resource block used for PSFCH transmission in each of the plurality of channel bandwidths. The UE determines that PSFCH is transmitted on the PSFCH resources corresponding to which channel bandwidths, and then determines the physical resource blocks used for PSFCH transmission based on the received indication information.

In some embodiments, an sl-PSFCH-RB-Set parameter may be configured in a form of a bitmap, and indicates a physical resource block used for PSFCH transmission in each of the plurality of channel bandwidths. By configuring the sl-PSFCH-RB-Set parameter, configuration of physical resource blocks used for PSFCH transmission is implemented.

In some embodiments, each channel bandwidth may correspond to an independent sl-PSFCH-RB-Set parameter, or all channel bandwidths share the same sl-PSFCH-RB-Set parameter.

Each bit in the sl-PSFCH-RB-Set parameter corresponds to one physical resource block. According to values of the bits in the sl-PSFCH-RB-Set parameter, $M_{\text{PRB, set}}^{\text{PSFCH}}$ can be determined, where $M_{\text{PRB, set}}^{\text{PSFCH}}$ corresponds to a total number of the physical resource blocks that can be used for PSFCH transmission.

In specific applications, when the value of a bit in the sl-PSFCH-RB-Set parameter is 1, it indicates that the bit can be used for PSFCH transmission; conversely, if the value of the bit is 0, it indicates that the bit cannot be used for PSFCH transmission.

In some embodiments, a PSSCH may occupy multiple subchannels. A starting subchannel may be merely selected as a reference point for mapping, or all the multiple subchannels may be selected as reference points for mapping.

In some embodiments, high-layer signaling sl-PSFCH-CandidateResourceType may be configured to implement the selection of reference point, specifically configured as "startSubCH" or "allocSubCH".

When configured as "startSubCH", $N_{\text{type}}^{\text{PSFCH}} = 1$, and PSSCH determines finally adopted PSFCH resources based merely on possible PSFCH resources corresponding to the starting subchannel occupied by the PSSCH. All available PSFCH resources are calculated as

$$R_{\text{PRB, CS}}^{\text{PSFCH}} = N_{\text{type}}^{\text{PSFCH}} \cdot M_{\text{subch, slot}}^{\text{PSFCH}} \cdot N_{\text{CS}}^{\text{PSFCH}}.$$

When configured as "allocSubCH", $N_{\text{type}}^{\text{PSFCH}} = N_{\text{subch}}^{\text{PSSCH}}$, and PSSCH determines the finally adopted PSFCH resources based on possible PSFCH resources corresponding to all the subchannels occupied by the PSSCH. All available PSFCH

$$R_{\text{PRB, CS}}^{\text{PSFCH}} = N_{\text{type}}^{\text{PSFCH}} \cdot M_{\text{subch, slot}}^{\text{PSFCH}} \cdot N_{\text{CS}}^{\text{PSFCH}}$$

resources are calculated as

Which PSFCH resource among the available PSFCH resources is used by the UE is determined by a following formula:

$$(P_{\mathrm{ID}} + M_{\mathrm{ID}}) mod R_{\mathrm{PRB, CS}}^{\mathrm{PSFCH}} ,$$

where $P_{\mathrm{ID}}$ is a sourceID provided by SCI; and $M_{\mathrm{ID}}$ corresponds to an identity indicated by a high-layer parameter received by the UE receiving the PSSCH if "casttype" in the SCI is configured as "01 ", otherwise, $M_{\mathrm{ID}}$ is 0.

From above, in the embodiments of the present disclosure, as each channel bandwidth corresponds to one or more PSFCH resources, a PSSCH corresponds to a plurality of PSFCH resources accordingly, thereby increasing a number of PSFCH resources corresponding to the PSSCH, which may avoid a situation that PSFCH cannot be transmitted, and improve data transmission efficiency.

Referring to FIG. 2, FIG. 2 is a block diagram of a PSFCH sending apparatus 20 according to an embodiment. The PSFCH sending apparatus 20 includes a performing circuitry 201 and a sending circuitry 202.

The performing circuitry 201 is configured to perform LBT respectively on a plurality of channel bandwidths corresponding to a BWP, where each of the plurality of channel bandwidths corresponds to one or more PSFCH resources.

The sending circuitry 202 is configured to send PSFCH on at least one PSFCH resource corresponding to at least one channel bandwidth where LBT is successfully performed.

In some embodiments, the PSFCH sending apparatus 20 may correspond to a chip with a data processing function in a UE, such as a baseband chip, or to a chip module containing a chip (such as a baseband chip) with a data processing function in a UE, or to a UE.

In some embodiments, modules/units included in each apparatus and product described in the above embodiments may be software modules/units, hardware modules/units, or a combination of software modules/units and hardware modules/units.

For example, for each apparatus or product applied to or integrated in a chip, each module/unit included therein may be implemented by hardware such as circuits; or, at least some modules/units may be implemented by a software program running on a processor integrated inside the chip, and the remaining (if any) part of the modules/units may be implemented by hardware such as circuits. For each apparatus or product applied to or integrated in a chip module, each module/unit included therein may be implemented by hardware such as circuits. Different modules/units may be disposed in a same component (such as a chip or a circuit module) or in different components of the chip module. Or at least some modules/units may be implemented by a software program running on a processor integrated inside the chip module, and the remaining (if any) part of the modules/units may be implemented by hardware such as circuits. For each apparatus or product applied to or integrated in a terminal, each module/unit included therein may be implemented by hardware such as circuits. Different modules/units may be disposed in a same component (such as a chip or a circuit module) or in different components of the terminal. Or at least some modules/units may be implemented by a software program running on a processor integrated inside the terminal, and the remaining (if any) part of the modules/units may be implemented by hardware such as circuits.

In an embodiment of the present disclosure, a non-volatile or non-transitory computer-readable storage medium having computer instructions stored therein is provided, where when the computer instructions are executed by a processor, the PSFCH sending method provided in any one of the above embodiments is performed.

In an embodiment of the present disclosure, a PSFCH sending apparatus including a memory and a processor is provided, where the memory has computer instructions stored therein, and when the processor executes the computer instructions, the PSFCH sending method provided in any one of the above embodiments is performed.

Those skilled in the art could understand that all or part of steps in the various methods in the above embodiments can be completed by instructing relevant hardware through a program, and the program can be stored in any computer-readable storage medium which includes a ROM, a RAM, a magnetic disk or a compact disc.

Although the present disclosure has been disclosed above with reference to preferred embodiments thereof, it should be understood that the disclosure is presented by way of example only, and not limitation. Those skilled in the art can modify and vary the embodiments without departing from the spirit and scope of the present disclosure.

**Claims**

1. A Physical Sidelink Feedback CHannel (PSFCH) sending method, **characterized by** comprising:
   sending PSFCH on at least one PSFCH resource corresponding to at least one channel bandwidth where Listen Before Talk (LBT) is successfully performed, wherein the at least one channel bandwidth where LBT is successfully performed corresponds to a same Bandwidth Part (BWP), and the BWP corresponds to a plurality of channel bandwidths each of which corresponds to one or more PSFCH resources.

2. The method according to claim 1, wherein prior to said sending PSFCH on at least one PSFCH resource corresponding to at least one channel bandwidth where LBT is successfully performed, the method further comprises:

receiving indication information which indicates a physical resource block used for PSFCH transmission in each of the plurality of channel bandwidths.

3. The method according to claim 2, wherein said receiving the indication information comprises:

receiving an sl-PSFCH-RB-set parameter, wherein each bit in the sl-PSFCH-RB-set parameter corresponds to one physical resource block.

4. The method according to claim 1, wherein said sending PSFCH on at least one PSFCH resource corresponding to at least one channel bandwidth where LBT is successfully performed comprises:

sending PSFCH on the PSFCH resource corresponding to each of the at least one channel bandwidth where LBT is successfully performed; or
selecting one PSFCH resource from multiple PSFCH resources corresponding to multiple channel bandwidths where LBT is successfully performed, and sending PSFCH on the selected PSFCH resource.

5. The method according to claim 4, wherein said selecting one PSFCH resource from a plurality of PSFCH resources corresponding to multiple channel bandwidths where LBT is successfully performed comprises any one of the following:

selecting one PSFCH resource corresponding to a channel bandwidth with a greatest channel bandwidth index number;
selecting one PSFCH resource corresponding to a channel bandwidth with a smallest channel bandwidth index number;
selecting one PSFCH resource corresponding to a physical resource block with a greatest physical resource block index number;
selecting one PSFCH resource corresponding to a physical resource block with a smallest physical resource block index number; or
selecting one PSFCH resource earliest in a time sequence.

6. The method according to claim 1, wherein PSFCH resources corresponding to the plurality of channel bandwidths are distributed in different slots.

7. The method according to claim 1, wherein each of the plurality of channel bandwidths corresponds to one PSFCH resource.

8. The method according to any one of claims 1 to 7, wherein the plurality of channel bandwidths are frequency domain bandwidths used for LBT.

9. A Physical Sidelink Feedback CHannel (PSFCH) sending apparatus, **characterized by** comprising:
a sending circuitry configured to send PSFCH on at least one PSFCH resource corresponding to at least one channel bandwidth where Listen Before Talk (LBT) is successfully performed, wherein the at least one channel bandwidth where LBT is successfully performed corresponds to a same Bandwidth Part (BWP), and the BWP corresponds to a plurality of channel bandwidths each of which corresponds to one or more PSFCH resources.

10. A non-volatile or non-transitory computer-readable storage medium having computer instructions stored therein, wherein when the computer instructions are executed by a processor, the method of any one of claims 1 to 8 is performed.

11. A Physical Sidelink Feedback CHannel (PSFCH) sending apparatus comprising a memory and a processor, wherein the memory has computer instructions stored therein, and when the processor executes the computer instructions, the method of any one of claims 1 to 8 is performed.

the UE performs LBT respectively on a plurality of channel bandwidths corresponding to a BWP — S101

the UE sends PSFCH on at least one PSFCH resource corresponding to at least one channel bandwidth where LBT is successfully performed — S102

**FIG. 1**

— 20

PSFCH sending apparatus

performing circuitry

sending circuitry

201 202

**FIG. 2**

## INTERNATIONAL SEARCH REPORT

International application No.

**PCT/CN2022/141477**

### A. CLASSIFICATION OF SUBJECT MATTER

H04W 28/20(2009.01)i

According to International Patent Classification (IPC) or to both national classification and IPC

### B. FIELDS SEARCHED

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT; 3GPP: 先听后说, 先听后讲, 部分带宽, 侧链路反馈信道, 信道, 带宽, 资源, 侧链路, 旁路, 副链路, PSFCH, BWP, LBT, channel, band, resource, sidelink, SL

### C. DOCUMENTS CONSIDERED TO BE RELEVANT

| Category* | Citation of document, with indication, where appropriate, of the relevant passages | Relevant to claim No. |
|---|---|---|
| PX | US 2022279377 A1 (QUALCOMM INC.) 01 September 2022 (2022-09-01) description, paragraphs [0005]-[0244] | 1-11 |
| X | WO 2021237515 A1 (QUALCOMM INC. et al.) 02 December 2021 (2021-12-02) description, paragraphs [0005]-[0151] | 1-11 |
| X | WO 2021215098 A1 (PANASONIC INTELLECTUAL PROPERTY CORPORATION OF AMERICA) 28 October 2021 (2021-10-28) description, paragraphs [0004]-[0255] | 1-11 |
| A | CN 112865928 A (NANTONG XINJU COMPUTER INFORMATION TECHNOLOGY CO., LTD.) 28 May 2021 (2021-05-28) entire document | 1-11 |
| A | WO 2021248300 A1 (QUALCOMM INC. et al.) 16 December 2021 (2021-12-16) entire document | 1-11 |

☐ Further documents are listed in the continuation of Box C.    ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 January 2023** | **20 January 2023** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/141477**

| Patent document cited in search report | | | Publication date (day/month/year) | Patent family member(s) | | | Publication date (day/month/year) |
|---|---|---|---|---|---|---|---|
| US | 2022279377 | A1 | 01 September 2022 | WO | 2022187110 | A1 | 09 September 2022 |
| WO | 2021237515 | A1 | 02 December 2021 | None | | | |
| WO | 2021215098 | A1 | 28 October 2021 | None | | | |
| CN | 112865928 | A | 28 May 2021 | None | | | |
| WO | 2021248300 | A1 | 16 December 2021 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111677011X